(19) Europäisches Patentamt
European Patent Office
Office européen des brevets

(11) EP 1 881 054 B1

(12) EUROPÄISCHE PATENTSCHRIFT

(45) Veröffentlichungstag und Bekanntmachung des Hinweises auf die Patenterteilung:
**29.02.2012 Patentblatt 2012/09**

(51) Int Cl.:
***C10L 1/196*** *(2006.01)* ***C10L 1/197*** *(2006.01)*
***C10L 10/14*** *(2006.01)* ***C08L 23/08*** *(2006.01)*
***C08L 23/14*** *(2006.01)*

(21) Anmeldenummer: **07011539.9**

(22) Anmeldetag: **13.06.2007**

(54) **Additive zur Verbesserung der Kälteeigenschaften von Brennstoffölen**

Additives for improving the cold properties of fuel oils

Additif destiné à l'amélioration des propriétés à froid d'huiles combustibles

(84) Benannte Vertragsstaaten:
**BE DE ES FI FR GB NL SE**

(30) Priorität: **18.07.2006 DE 102006033149**

(43) Veröffentlichungstag der Anmeldung:
**23.01.2008 Patentblatt 2008/04**

(73) Patentinhaber: **Clariant Finance (BVI) Limited**
**Road Town, Tortola (VG)**

(72) Erfinder:
- **Siggelkow, Bettina, Dr.**
**60327 Frankfurt (DE)**
- **Reimann, Werner, Dr.**
**65929 Frankfurt (DE)**
- **Krull, Matthias, Dr.**
**55296 Harxheim (DE)**

(74) Vertreter: **Mikulecky, Klaus**
**Clariant Produkte (Deutschland) GmbH**
**Group Intellectual Property**
**Am Unisys-Park 1**
**65843 Sulzbach (DE)**

(56) Entgegenhaltungen:
**EP-A2- 1 146 108 EP-A2- 1 526 168**
**GB-A- 1 205 772**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 881 054 B1

**Beschreibung**

Die vorliegende Erfindung betrifft Additive enthaltend Ethylen-Propylen-Vinylester-Terpolymere, die eine verbesserte Handhabbarkeit und verbesserte anwendungstechnische Eigenschaften als Kälteadditive für Brennstofföle aufweisen.

Rohöle und durch Destillation von Rohölen gewonnene Mitteldestillate wie Gasöl, Dieselöl oder Heizöl enthalten je nach Herkunft der Rohöle unterschiedliche Mengen an n-Paraffinen, die bei Erniedrigung der Temperatur als plättchenförmige Kristalle auskristallisieren und teilweise unter Einschluss von Öl agglomerieren. Durch diese Kristallisation und Agglomeration kommt es zu einer Verschlechterung der Fließeigenschaften der Öle bzw. Destillate, wodurch bei Gewinnung, Transport, Lagerung und/oder Einsatz der Mineralöle und Mineralöldestillate Störungen auftreten können. Beim Transport von Mineralölen durch Rohrleitungen kann das Kristallisationsphänomen vor allem im Winter zu Ablagerungen an den Rohrwänden und in Einzelfällen, z.B. bei Stillstand einer Pipeline, sogar zu deren völliger Verstopfung führen. Bei der Lagerung und Weiterverarbeitung der Mineralöle kann es ferner im Winter erforderlich sein, die Mineralöle in beheizten Tanks zu lagern um ihre Fließfähigkeit zu gewährleisten. Bei Mineralöldestillaten kommt es als Folge der Kristallisation gegebenenfalls zu Verstopfungen der Filter in Dieselmotoren und Feuerungsanlagen, wodurch eine sichere Dosierung der Brennstoffe verhindert wird und unter Umständen eine völlige Unterbrechung der Kraftstoff- bzw. Heizmittelzufuhr eintritt.

Neben den klassischen Methoden zur Beseitigung der auskristallisierten Paraffine (thermisch, mechanisch oder mit Lösungsmitteln), die sich lediglich auf die Entfernung der bereits gebildeten Ausfällungen beziehen, werden zunehmend chemische Additive, so genannte Fließverbesserer eingesetzt. Diese Additive enthalten oftmals zwei Komponenten: zum einen als zusätzliche Kristallkeime wirkende und mit den Paraffinen auskristallisierende Bestandteile, die eine größere Anzahl kleinerer Paraffinkristalle mit veränderter Kristallform bewirken (Nucleatoren) und zum anderen das Wachstum der einmal gebildeten Kristalle begrenzende Bestandteile (Arrestoren). Die modifizierten Paraffinkristalle neigen weniger zur Agglomeration, so dass sich die mit diesen Additiven versetzten Öle noch bei Temperaturen pumpen bzw. verarbeiten lassen, die oft mehr als 20°C tiefer liegen als bei nicht additivierten Ölen.

Im Zuge abnehmender Welterdölreserven werden immer schwerere und damit paraffinreichere Rohöle gefördert und verarbeitet, die folglich auch zu paraffinreicheren Brennstoffölen führen. Zudem bedingt die aus Umweltschutzgründen zunehmende hydrierende Entschwefelung von Brennstoffölen eine geänderte Verarbeitung der Rohöle, die teilweise zu einem erhöhten Anteil an kältekritischen Paraffinen im Brennstofföl führt. In derartigen Ölen ist die Wirksamkeit der bekannten Additive des Standes der Technik oftmals unbefriedigend. Weiterhin erfordern die geringen Toleranzen moderner Motorentechnologie, die für die Einhaltung von Emissionswerten erforderlich sind, sehr reine Brennstofföle. Die bekannten Additive des Standes der Technik, insbesondere die als Kristallkeimbildner eingesetzten Additivkomponenten enthalten jedoch oftmals geringe Anteile an schwerer löslichen und teilweise rekristallisierenden Bestandteilen, die zu Problemen in den Einspritzanlagen bzw. zu Belegungen in den vorgeschalteten Kraftstofffiltern führen können.

Eine bekannte und vielfach für die Verbesserung der Kälteeigenschaften von Mineralölen und daraus hergestellten Mitteldestillaten eingesetzte Additivklasse sind Copolymere aus Ethylen und Vinylestern. Dabei handelt es sich um teilkristalline Polymere, deren Wirkungsweise über eine Cokristallisation ihrer Poly(ethylen)-Sequenzen mit den bei Abkühlung aus den Mitteldestillaten ausfallenden n-Paraffinen erklärt wird. Durch dieses physikalische Zusammenwirken werden Form, Größe und Adhäsionseigenschaften der ausfallenden Paraffinkristalle dahingehend modifiziert, dass viele kleine Kristalle entstehen, die den Kraftstofffilter passieren und dem Brennraum zugeführt werden können.

Insbesondere die als Kristallkeimbildner bzw. Nukleierungsmittel eingesetzten Ethylen-Copolymere müssen zur Erfüllung ihrer Funktion eine geringe Löslichkeit im Öl aufweisen, um bei Abkühlung des Öls mit bzw. kurz vor den Paraffinen zu kristallisieren. Als Kristallkeimbildner werden bevorzugt Ethylen-Copolymere mit niedrigem Comonomergehalt und damit langen freien Poly(ethylen)-Sequenzen eingesetzt, die besonders gut zur Cokristallisation mit den zuerst aus dem Öl ausfallenden langkettigen Paraffinen befähigt sind. Um aber oberhalb des Cloud Points des Öls vollständig gelöst und nicht selbst Anlass für Filterverstopfungen zu sein, erfordern diese Ethylen-Vinylester-Copolymere auf Grund ihrer erhöhten Eigenkristallinität, bei erhöhter Temperatur gehandhabt und dosiert zu werden oder alternativ in hoher Verdünnung mit Lösemitteln transportiert und verarbeitet zu werden. Andernfalls besteht die Gefahr, dass die Additive ungelöst bleiben, wodurch sie ihre volle Wirksamkeit nicht entfalten können und zudem selbst Anlass für Filterbelegungen und Filterverstopfungen geben können.

Des weiteren erfordern insbesondere die Einspritzaggregate und Pumpen aktueller Motorenkonzepte sehr saubere Kraftstoffe. Auch kleine Anteile ungelöster Additivbestandteile sind in diesem Zusammenhang hochgradig unerwünscht. Eine Entfernung derartiger Nebenbestandteile von Polymeren durch Filtration ist, wenn überhaupt möglich, sehr aufwendig.

Es ist bekannt, die Eigenfließfähigkeit von Ethylen-Vinylester-Copolymeren sowie deren Dispersionen durch einen hohen Anteil an so genannten Kurzkettenverzweigungen, wie er beispielsweise durch Polymerisation bei hohen Temperaturen und/oder niedrigen Drücken eingestellt werden kann, zu verbessern. Diese Kurzkettenverzweigungen

entstehen durch intramolekulare Kettenübertragungsreaktionen ("back-biting mechanism") während der Radikalkettenpolymerisation und bestehen im Wesentlichen aus Butyl- und Ethylresten (siehe z.B. Macromolecules 1997, 30, 246-256). Allerdings vermindern diese Kurzkettenverzweigungen die Wirksamkeit dieser Polymere als Kälteadditive deutlich.

Den Kurzkettenverzweigungen vergleichbare Strukturen und damit verbundene Effekte werden durch den Einbau verzweigter Comonomere wie Isobutylen (EP-A-0 099 646), 4-Methylpenten (EP-A-0 807 642) oder Diisobutylen (EP-A-0 203 554) in EVA-Copolymere erhalten: Mit zunehmendem Einbau dieser Monomere wird zwar eine Verbesserung der Fließfähigkeit und der Löslichkeit der Polymere beobachtet, doch sinkt gleichzeitig auch ihre Wirksamkeit als Kälteadditiv.

EP-A-0 890 589 offenbart Copolymere aus niederen Olefinen und mindestens 3 mol.-% Vinylestern gesättigter, verzweigter Carbonsäuren mit 7 bis 17 C-Atomen, in denen der Alkylrest mit seinem tertiären C-Atom an die Carboxylfunktion gebunden ist.

US-3 961 916 offenbart Brennstofföle, die zur Verbesserung der Kaltfließeigenschaften zwei Copolymere aus Ethylen und ungesättigten Estern enthalten, die als Nucleatoren bzw. Arrestoren für die Paraffinkristallisation fungieren.

EP-A-0 217 602 offenbart Copolymere aus Ethylen und ethylenisch ungesättigten Estern mit $C_1$-$C_{18}$-Alkylresten und deren Verwendung als Kälteadditive für Brennstofföle. Die Beispiele beschränken sich auf Vinylacetat und Methylacrylat.

EP-A-0 741 181 offenbart Mischungen von Copolymeren aus Ethylen und Vinylestern, von denen mindestens eines einen Vinylester mit einem Alkylrest mit mindestens 4 C-Atomen trägt und deren Verwendung zur Verbesserung der Niedrigtemperatureigenschaften eines Öls.

WO 94/00537 offenbart Copolymere aus Ethylen und ethylenisch ungesättigten Estern, die einen Alkylrest mit mindestens 2 C-Atomen tragen und deren Verwendung zur Verbesserung der Kälteeigenschaften von wachshaltigen Ölen. In Beispiel 5 wird eine Mischung aus zwei Ethylen-Vinylhexanoat-Copolymeren mit unterschiedlichen Comonomergehalten, Molekulargewichten und Verzweigungsgraden eingesetzt.

EP-A-0 931 824 offenbart Additive zur Verbesserung der Kaltfließeigenschaften von Mineralölen und Mineralöldestillaten, enthaltend Copolymere aus Ethylen und Vinylester tertiärer Carbonsäuren. Diese Additive zeigen eine verbesserte Löslichkeit, so dass die Filtrierbarkeit der mit ihnen additivierten Öle auch bei niedrigen Einmischungstemperaturen von Öl und/oder Additiv erhalten bleibt.

Die hohe Eigenkristallinität bekannter Nucleatoren führt in Additivformulierungen oftmals zu Unverträglichkeiten insbesondere mit Ethylen-Copolymeren, die als Arrestoren wirken und einen deutlich höheren Comonomergehalt aufweisen. Dies kann zu unerwünschten Trübungen und Ausfällungen und damit zu inhomogenen Additiven führen, die sich nicht mehr reproduzierbar verwenden lassen.

Durch Kurzkettenverzweigungen wie auch längerkettige und insbesondere verzweigte olefinische Comonomere lässt sich die Eigenfließfähigkeit von Polymeren aus Ethylen und ungesättigten Estern zwar verbessern, doch geht dies oftmals mit einem Verlust an Wirksamkeit als Kaltfließverbesserer einher, da der für die Cokristallisation mit Paraffinen optimale Bereich der Polyethylensequenzlängen verlassen wird bzw. selbst bereits kleinere Mengen der Comonomere eine so starke Störung der Polyethylensequenzen bewirken, dass eine effektive Cokristallisation mit den Paraffinen des Öls und insbesondere eine Stimulierung der Paraffinkristallisation (Nukleierung) nicht mehr möglich ist. Darüber hinaus enthalten diese Nucleatoren oftmals sehr schwer lösliche und aus dem Öl rekristallisierende Anteile, die zu Verstopfungen von Filtern und Einspritzanlagen führen können.

Der Einbau größerer Mengen der bekannten verzweigten Olefine wie Isobutylen, 4-Methylpenten oder Diisobutylen in Polymere aus Ethylen und ungesättigten Estern wird zudem dadurch begrenzt, dass diese Olefine eine dermaßen stark moderierende Wirkung auf die Polymerisation haben, so dass der Bedarf an Initiatoren ein für kommerzielle Anwendungen prohibitives Niveau erreicht, kein ausreichend hohes Molekulargewicht erreicht wird und/oder dass kein kommerziell interessanter Umsatz bei der Polymerisation zu erzielen ist. Darüber hinaus zeigen die daraus resultierenden, stark kurzkettenverzweigten Produkte keine ausreichende Wirksamkeit als Nukleierungsmittel für die Paraffinkristallisation.

Es war folglich Aufgabe der vorliegenden Erfindung, Additive zur Verbesserung der Kaltfließfähigkeit von Brennstoffölen bereitzustellen, die bei möglichst niedrigen Temperaturen in möglichst konzentrierter Form fließfähig und pumpbar sind, eine gegenüber den Additiven des Standes der Technik verbesserte Wirksamkeit als Kaltfließverbesserer zeigen und keine unlöslichen, zu Ventil- und/oder Filterverstopfungen führenden Anteile enthalten. Zudem sollen diese Additive eine verbesserte Verträglichkeit mit Ethylen-Copolymeren mit höherem Comonomergehalt (Arrestoren) aufweisen.

Es wurde nun gefunden, dass Additivkonzentrate, die Terpolymere mit wenigen Kurzkettenverzweigungen aus Ethylen, Propen und ethylenisch ungesättigten Estern mit einem $C_4$- bis $C_{20}$-Alkylrest enthalten eine sehr gute Handhabbarkeit bei niedrigen Temperaturen und gleichzeitig eine überlegene Wirksamkeit als Kälteadditiv zeigen. Zudem enthalten diese Additive weniger schwer lösliche Anteile und zeigen eine verbesserte Verträglichkeit mit als Arrestoren wirksamen Ethylen-Copolymeren. Es ist dabei von besonderer Bedeutung, dass das Propylen als Comonomer eingebaut wird und nicht nur im Sinne eines Moderators an das Kettenende gebunden ist.

Gegenstand der Erfindung sind somit Terpolymere aus Ethylen, mindestens einem ethylenisch ungesättigten Ester und Propen, welche

i) 4,0 bis 12,0 mol-% von mindestens einem ethylenisch ungesättigten Ester mit einem $C_4$- bis $C_{20}$-Alkylrest abgeleitete Struktureinheiten,

ii) 0,5 bis 4,0 vom Propen abgeleitete Methylgruppen pro 100 aliphatische C-Atome, und

iii) weniger als 8,0 von Kettenenden stammende Methylgruppen pro 100 $CH_2$-Gruppen aufweisen.

Ein weiterer Gegenstand der Erfindung ist die Verwendung des erfindungsgemäßen Terpolymers zur Verbesserung der Kältefließfähigkeit von Brennstoffölen.

Ein weiterer Gegenstand der Erfindung ist ein Verfahren zur Verbesserung der Kältefließfähigkeit von Brennstoffölen, indem man dem Brennstofföl mindestens ein erfindungsgemäßes Terpolymer zusetzt.

Ein weiterer Gegenstand der Erfindung sind Brennstofföle mit verbesserter Kaltfließfähigkeit, enthaltend mindestens ein erfindungsgemäßes Terpolymer und ein Mitteldestillat.

Ein weiterer Gegenstand der Erfindung sind Additivmischungen, enthaltend

A) mindestens ein erfindungsgemäßes Terpolymer und

B) 0,5 bis 20 Gewichtsteile bezogen auf A) mindestens einer weiteren, als Kälteadditiv für Mineralöle wirksamen, Komponente ausgewählt aus

B1) Copolymeren aus Ethylen und ethylenisch ungesättigten Verbindungen, deren Gehalt an ethylenisch ungesättigten Verbindungen mindestens 2 mol-% höher ist als der Gehalt des unter A) definierten Terpolymers an ethylenisch ungesättigten Estern,

B2) Kammpolymeren, und

B3) Mischungen aus B1) und B2).

Ein weiterer Gegenstand der Erfindung ist die Verwendung von Additivmischungen aus A) und B) zur Verbesserung der Kältefließfähigkeit von Brennstoffölen.

Ein weiterer Gegenstand der Erfindung ist ein Verfahren zur Verbesserung der Kältefließfähigkeit von Brennstoffölen, indem man dem Brennstofföl eine Additivmischung aus A) und B) zusetzt.

Ein weiterer Gegenstand der Erfindung sind Brennstofföle mit verbesserter Kaltfließfähigkeit, enthaltend eine Additivmischung aus A) und B).

Für die Komponente A) erfindungsgemäß geeignete ungesättigte Ester sind insbesondere Vinylester von Carbonsäuren mit 5 bis 21 C-Atomen sowie Ester der Acryl- und Methacrylsäure mit Fettalkoholen mit 4 bis 20 C-Atomen.

Besonders bevorzugt als ethylenisch ungesättigte Ester sind Vinylester von Carbonsäuren mit 2 bis 12 C-Atomen. Dabei handelt es sich vorzugsweise um solche der Formel 1

$$CH_2=CH\text{-}OCOR^1 \qquad (1)$$

worin $R^1$ für $C_4$- bis $C_{20}$-Alkyl, vorzugsweise für $C_6$- bis $C_{18}$-Alkyl und insbesondere für $C_8$- bis $C_{12}$-Alkyl steht. Die Alkylreste können linear oder verzweigt sein. Bevorzugt sind die Alkylreste verzweigt und insbesondere befindet sich die Verzweigung in $\alpha$-Position zur Carbonylgruppe. Besonders bevorzugt ist der Alkylrest über ein tertiäres C-Atom an die Carbonylgruppe gebunden. Beispiele für geeignete Vinylester sind Vinyl-n-butyrat, Vinylisobutyrat, Vinylpentanoat, Vinylpivalat, Vinyl-n-hexanoat, Vinyl-2-ethylhexanoat, Vinylneononanoat, Vinylneodecanoat, Vinylneoundecanoat, Vinyllaurat und Vinylstearat.

Weiterhin bevorzugt als ethylenisch ungesättigte Ester sind Ester der Acryl- und Methacrylsäure mit Fettalkoholen mit 1 bis 12 C-Atomen. Dabei handelt es sich vorzugsweise um solche der Formel 2

$$CH_2=CR^2\text{-}COOR^3 \qquad (2)$$

worin $R^2$ Wasserstoff oder Methyl und $R^3$ C4- bis $C_{20}$-Alkyl, vorzugsweise $C_6$- bis $C_{18}$-Alkyl, speziell $C_8$- bis $C_{12}$-Alkyl bedeutet. Die Alkylreste können linear oder verzweigt sein. Bevorzugt sind die Alkylreste verzweigt und insbesondere befindet sich die Verzweigung in $\alpha$-Position zur Carbonylgruppe. Geeignete (Meth)acrylester umfassen z.B., n- und iso-Butyl(meth)acrylat, n- und iso-Hexyl-, n- und iso-Octyl(meth)acrylat), 2-Ethylhexyl(meth)acrylat, Decyl(meth)acrylat, Dodecyl(meth)acrylat Isotridecyl(meth)acrylat sowie Mischungen dieser Comonomere.

Der Gehalt der erfindungsgemäßen Terpolymere an ungesättigtem Ester liegt bevorzugt zwischen 4,5 und 10,0 mol-%, und insbesondere zwischen 5,0 und 9,0 mol-% wie beispielsweise zwischen 5,0 und 8,0 mol-%. Die Bestimmung des Comonomergehalts erfolgt mittels Pyrolyse des Polymers und anschließender Titration der abgespaltenen Carbonsäure.

Die erfindungsgemäßen Terpolymere können zusätzlich untergeordnete Mengen von beispielsweise bis zu 3,0 mol-%, bevorzugt bis zu 2,0 mol-% wie beispielsweise 0,1 bis 1,0 mol-% an Struktureinheiten enthalten, die sich von ungesättigten Estern mit kürzeren Alkylketten ableiten. Hierfür geeignete ungesättigte Ester sind Vinylester der Formel (1) und/oder (Meth)acrylsäureester der Formel (2), in denen $R^2$ und $R^3$ unabhängig voneinander für einen Alkylrest mit 1 bis 3 C-Atomen stehen. Besonders bevorzugt ist Vinylacetat.

Der Gehalt der erfindungsgemäßen Terpolymere an Methylgruppen, die sich vom Propen ableiten liegt bevorzugt zwischen 0,6 und 4,0 und insbesondere zwischen 0,8 und 3,5 wie beispielsweise zwischen 0,9 und 3,0 Methylgruppen pro 100 aliphatischen C-Atomen.

Die Anzahl der vom Propen abgeleiteten Methylgruppen (Propen-$CH_3$) pro 100 aliphatischer C-Atome im erfindungsgemäßen Terpolymer wird mittels $^{13}$C-NMR-Spektroskopie bestimmt. So zeigen Terpolymere aus Ethylen, Vinylester und Propen ein charakteristisches Signal von an das Polymerrückgrat gebundenen Methylgruppen zwischen etwa 19,3 und 19,9 ppm, die im DEPT-Experiment ein positives Vorzeichen haben. Das Integral dieses Signals der von Propen abgeleiteten Methylseitengruppen des Polymerrückgrats wird zu demjenigen aller übrigen aliphatischen C-Atome des Polymerrückgrats zwischen etwa 6 und 44 ppm ins Verhältnis gesetzt. Von den Alkylresten der ungesättigten Ester stammende und mit den Signalen des Polymerrückgrats überlagernde Signale werden auf Basis des Signals der der Carbonylgruppe des ungesättigten Esters benachbarten Methingruppe vom Gesamtintegral der aliphatischen C-Atome subtrahiert. Derartige Messungen lassen sich zum Beispiel mit NMR-Spektrometem bei einer Messfrequenz von 125 MHz bei 30°C in Lösemitteln wie $CDCl_3$ oder $C_2D_2Cl_4$ durchführen.

Die Anzahl der von Kettenenden stammenden Methylgruppen in den erfindungsgemäßen Terpolymeren liegt bevorzugt zwischen 2,5 und 8,0 $CH_3$/100 $CH_2$-Gruppen und insbesondere zwischen 3,0 und 7,5$CH_3$/100 $CH_2$-Gruppen wie beispielsweise zwischen 3,5 und 7,0 $CH_3$/100 $CH_2$-Gruppen.

Unter der Anzahl der aus Kettenenden stammenden Methylgruppen werden alle diejenigen Methylgruppen des erfindungsgemäßen Terpolymers verstanden, die nicht aus den als Comonomere eingesetzten ungesättigten Estern stammen. Es werden hierunter folglich sowohl die an den Hauptkettenenden befindlichen Methylgruppen inklusive der aus Struktureinheiten des Moderators abgeleiteten Methylgruppen wie auch die aus Kurzkettenverzweigungen stammenden Methylgruppen verstanden.

Die Anzahl der von Kettenenden stammenden Methylgruppen wird mittels $^{1}$H-NMR-Spektroskopie bestimmt, indem das Integral der im $^{1}$H-NMR-Spektrum üblicherweise bei einer chemischen Verschiebung zwischen etwa 0,7 und 0,9 ppm (gegenüber TMS) erscheinenden Signale der Methylprotonen mit dem Integral der bei 0,9 bis 1,9 ppm erscheinenden Signalen der Methylen- und Methinprotonen ins Verhältnis gesetzt wird. Die von Alkylresten der Comonomere stammenden Methyl- und Methylengruppen werden nicht mit einbezogen bzw. herausgerechnet. Die auf Struktureinheiten des Moderators zurückzuführenden Signale sind entsprechend den Methyl- bzw. Methylenprotonen zuzuordnen. Von dem dabei resultierenden Wert wird die mittels $^{13}$C-NMR-Spektroskopie bestimmte Anzahl der vom Propen abstammenden Methylgruppen subtrahiert um die Anzahl der von Kettenenden stammenden Methylgruppen zu erhalten. Geeignete $^{1}$H-NMR-Spektren können beispielsweise bei einer Messfrequenz von 500 MHz bei 30°C in Lösemitteln wie $CDCl_3$ oder $C_2D_2Cl_4$ aufgenommen werden.

Bevorzugt liegt die Summe G aus molarem Gehalt an ungesättigtem Ester i) und der Anzahl der vom Propen abgeleiteten Methylgruppen pro 100 aliphatischen C-Atomen des Polymers ii)

$$G = \{\text{mol-\% ungesättigter Ester}] + [\text{Propen-CH}_3]$$

zwischen 5,5 und 11,0 und bevorzugt zwischen 6,0 und 10,0 wie beispielsweise zwischen 6,5 und 9,0. Die beiden Summanden sind als dimensionslose Zahlen zu addieren.

Das mittels Gelpermeationschromatographie gegen Poly(styrol)-Standards bestimmte gewichtsmittlere Molekulargewicht Mw der erfindungsgemäßen Terpolymere liegt bevorzugt zwischen 2.500 und 50.000 g/mol, bevorzugt zwischen 4.000 und 30.000 g/mol wie beispielsweise zwischen 5000 und 25.000 g/mol. Die bei 140°C bestimmte Schmelzviskosität der erfindungsgemäßen Terpolymere liegt zwischen 100 und 5.000 mPas, bevorzugt zwischen 150 und 2.500 mPas und insbesondere zwischen 200 und 2.000 mPas.

Für alle Analysen wird das Polymer vorab zwei Stunden bei 140°C im Vakuum (100 mbar) von Restmonomeren und eventuellen Lösemittelanteilen befreit.

Die erfindungsgemäßen Ethylenterpolymere wie auch die Polymere B1 dieser Erfindung sind unabhängig voneinander durch übliche Copolymerisationsverfahren wie beispielsweise Suspensionspolymerisation, Lösungsmittelpolymerisation, Gasphasenpolymerisation oder Hochdruckmassepolymerisation herstellbar. Bevorzugt wird die Hochdruckmassepolymerisation bei Drucken oberhalb 100 MPa, bevorzugt zwischen 100 und 300 MPa wie beispielsweise zwischen 150 bis 275 MPa und Temperaturen von 100 bis 340°C, bevorzugt 150 bis 310°C wie beispielsweise zwischen 200 und 280°C durchgeführt. Durch geeignete Wahl der Reaktionsbedingungen sowie der eingesetzten Mengen an Monomeren lassen sich der Propengehalt wie auch das Ausmaß der Kurzkettenverzweigungen / Kettenenden einstellen. So führen insbesondere niedrige Reaktionstemperaturen und/oder hohe Drücke zu niedrigen Anteilen an Kurzkettenverzweigungen und damit zu einer niedrigen Anzahl an Kettenenden.

Die Reaktion der Monomeren wird durch Radikale bildende Initiatoren (Radikalkettenstarter) eingeleitet. Zu dieser Substanzklasse gehören z.B. Sauerstoff, Hydroperoxide, Peroxide und Azoverbindungen wie Cumolhydroperoxid, t-Butylhydroperoxid, Dilauroylperoxid, Dibenzoylperoxid, Bis(2-ethylhexyl)peroxid-carbonat, t-Butylperpivalat, t-Butylpermaleinat, t-Butylperbenzoat, Dicumylperoxid, t-Butylcumylperoxid, Di-(t-butyl)peroxid, 2,2'-Azo-bis(2-methylpropanonitril), 2,2'-Azo-bis(2-methylbutyronitril). Die Initiatoren werden einzeln oder als Gemisch aus zwei oder mehr Substanzen in Mengen von 0,01 bis 10 Gew.-%, vorzugsweise 0,05 bis 5 Gew.-%, bezogen auf das Monomerengemisch, eingesetzt.

Die Hochdruckmassepolymerisation wird in bekannten Hochdruckreaktoren, z.B. Autoklaven oder Rohrreaktoren, diskontinuierlich oder kontinuierlich durchgeführt, besonders bewährt haben sich kontinuierlich betriebene Rohrreaktoren. Lösungsmittel wie aliphatische und/oder aromatische Kohlenwasserstoffe oder Kohlenwasserstoffgemische, Benzol oder Toluol, können im Reaktionsgemisch enthalten sein. Bevorzugt ist die im wesentlichen lösungsmittelfreie Arbeitsweise. In einer bevorzugten Ausführungsform der Polymerisation wird das Gemisch aus den Monomeren, dem Initiator und, sofern eingesetzt, dem Moderator, einem Rohrreaktor über den Reaktoreingang sowie über einen oder mehrere Seitenäste zugeführt. Die Comonomeren wie auch die Moderatoren können dabei sowohl gemeinsam mit Ethylen als auch getrennt über Seitenströme in den Reaktor dosiert werden. Hierbei können die Monomerenströme unterschiedlich zusammengesetzt sein (EP-A-0 271 738 und EP-A-0 922 716).

Es hat sich als vorteilhaft erwiesen, das Molekulargewicht der Polymere nicht allein über die moderierende Wirkung des Propens einzustellen sondern zusätzlich solche Moderatoren einzusetzen, die im wesentlichen nur eine Kettenübertragung bewirken und nicht in Art von Comonomeren in die Polymerkette eingebaut werden. Somit können Methylgruppen als Störstellen selektiv in das Polymerrückgrat eingebaut werden und es werden Polymere mit verbesserter Wirksamkeit als Kaltfließverbesserer erhalten. Bevorzugte Moderatoren sind beispielsweise gesättigte und ungesättigte Kohlenwasserstoffe wie beispielsweise Propan, Hexan, Heptan und Cyclohexan sowie Alkohole wie beispielsweise Butanol sowie insbesondere Aldehyde wie beispielsweise Acetaldehyd, Propionaldehyd, n-Butyraldehyd und iso-Butyraldehyd sowie Ketone wie beispielsweise Aceton, Methylethylketon, Methylpropylketon, Methylisopropylketon, Methylbutylketon, Methylisobutylketon und Cyclohexanon. Auch Wasserstoff ist als Moderator geeignet.

In einer besonders bevorzugten Ausführungsform enthalten die erfindungsgemäßen Polymere zusätzlich zu Vinylester und Propen 0,3 bis 5,0 Gew.-%, bevorzugt 0,5 bis 3,5 Gew.-% an Struktureinheiten, die sich von mindestens einem Carbonylgruppen enthaltenden Moderator ableiten. Die Konzentration dieser vom Moderator abgeleiteten Strukturelemente im Polymer kann ebenfalls mittels $^1$H-NMR-Spektroskopie bestimmt werden. Dies kann zum Beispiel durch Korrelation der Intensität der vom Vinylester stammenden Signale, dessen Anteil im Polymer bekannt ist, mit den bei etwa 2,4 bis 2,5 ppm erscheinenden Signalen der zur Carbonylgruppe der Moderatoren benachbarten Methylen- bzw. Methingruppe erfolgen.

Als Komponente B1) geeignet sind ein oder mehrere Copolymere aus Ethylen und olefinisch ungesättigten Verbindungen, deren Gesamtcomonomergehalt um mindestens 2, vorzugsweise 3 mol-% höher ist als der von Komponente A. Als Ethylen-Copolymere eignen sich insbesondere solche, die neben Ethylen 9 bis 21 mol-%, insbesondere 10 bis 18 mol-% Comonomere enthalten. Comonomere können neben olefinisch ungesättigten Estern auch andere olefinisch ungesättigte Verbindungen sein. Unter Gesamtcomonomergehalt ist der Gehalt an Monomeren außer Ethylen zu verstehen.

Bei den olefinisch ungesättigten Verbindungen handelt es sich vorzugsweise um Vinylester, Acrylester, Methacrylester, Alkylvinylether und/oder Alkene, wobei die genannten Verbindungen mit Hydroxylgruppen substituiert sein können. Es können ein oder mehrere Comonomere im Polymer enthalten sein.

Bei den Vinylestern handelt es sich vorzugsweise um solche der Formel 3

$$CH_2=CH\text{-}OCOR^4 \qquad (3)$$

worin $R^4$ $C_1$ bis $C_{30}$-Alkyl, vorzugsweise $C_4$ bis $C_{16}$-Alkyl, speziell $C_6$- bis $C_{12}$-Alkyl bedeutet. In einer weiteren Ausführungsform können die genannten Alkylgruppen mit einer oder mehreren Hydroxylgruppen substituiert sein.

In einer bevorzugten Ausführungsform handelt es sich bei der Komponente B1 um Copolymere aus Ethylen und 8 bis 12 mol-% Vinylacetat und einer bei 140°C gemessenen Schmelzviskosität von 50 bis 300 mPas.

In einer weiteren bevorzugten Ausführungsform enthalten diese Ethylen-Copolymere Vinylacetat und mindestens einen weiteren Vinylester der Formel 3 worin $R^4$ für $C_4$ bis $C_{30}$-Alkyl, vorzugsweise $C_4$ bis $C_{16}$-Alkyl, speziell $C_6$- bis $C_{12}$-Alkyl steht.

In einer weiteren bevorzugten Ausführungsform steht $R^4$ für einen verzweigten Alkylrest oder einen Neoalkylrest mit 7 bis 11 Kohlenstoffatomen, insbesondere mit 8, 9 oder 10 Kohlenstoffatomen. Besonders bevorzugte Vinylester leiten sich von sekundären und insbesondere tertiären Carbonsäuren ab, deren Verzweigung sich in alpha-Position zur Carbonylgruppe befindet. Geeignete Vinylester umfassen Vinylacetat, Vinylpropionat, Vinylbutyrat, Vinylisobutyrat, Vinylhexanoat, Vinylheptanoat, Vinyloctanoat, Pivalinsäurevinylester, 2-Ethylhexansäurevinylester, Vinyllaurat, Vinylstearat sowie Versaticsäureester wie Neononansäurevinylester, Neodecansäurevinylester, Neoundecansäurevinylester.

Bei den Acrylestern handelt es sich vorzugsweise um solche der Formel 4

$$CH_2=CR^2-COOR^5 \qquad (4)$$

worin $R^2$ Wasserstoff oder Methyl und $R^5$ $C_1$- bis $C_{30}$-Alkyl, vorzugsweise $C_4$- bis $C_{16}$-Alkyl, speziell $C_6$- bis $C_{12}$-Alkyl bedeutet. Geeignete Acrylester umfassen z.B. Methyl(meth)acrylat, Ethyl(meth)acrylat, Propyl(meth)acrylat, n- und iso-Butyl(meth)acrylat, Hexyl-, Octyl-, 2-Ethylhexyl-, Decyl-, Dodecyl-, Tetradecyl-, Hexadecyl-, Octadecyl(meth)acrylat sowie Mischungen dieser Comonomere. In einer weiteren Ausführungsform können die genannten Alkylgruppen mit einer oder mehreren Hydroxylgruppen substituiert sein. Ein Beispiel für einen solchen Acrylester ist Hydroxyethylmethacrylat.

Bei den Alkylvinylethern handelt es sich vorzugsweise um Verbindungen der Formel 5

$$CH_2=CH-OR^6 \qquad (5)$$

worin $R^6$ $C_1$- bis $C_{30}$-Alkyl, vorzugsweise $C_4$- bis $C_{16}$-Alkyl, speziell $C_6$- bis $C_{12}$-Alkyl bedeutet. Beispielsweise seien genannt Methylvinylether, Ethylvinylether, isoButylvinylether. In einer weiteren Ausführungsform können die genannten Alkylgruppen mit einer oder mehreren Hydroxylgruppen substituiert sein.

Bei den Alkenen handelt es sich vorzugsweise um einfache ungesättigte Kohlenwasserstoffe mit 3 bis 30 Kohlenstoffatomen, insbesondere 4 bis 16 Kohlenstoffatomen und speziell 5 bis 12 Kohlenstoffatomen. Geeignete Alkene umfassen Propen, Buten, Isobutylen, Penten, Hexen, 4-Methylpenten, Octen, Diisobutylen sowie Norbornen und seine Derivate wie Methylnorbornen und Vinylnorbornen. In einer weiteren Ausführungsform können die genannten Alkylgruppen mit einer oder mehreren Hydroxylgruppen substituiert sein.

Besonders bevorzugte Terpolymerisate des 2-Ethylhexansäurevinylesters, des Neononansäurevinylesters bzw. des Neodecansäurevinylesters enthalten außer Ethylen bevorzugt 3,5 bis 20 mol-%, insbesondere 8 bis 15 mol-% Vinylacetat und 0,1 bis 12 mol-%, insbesondere 0,2 bis 5 mol-% des jeweiligen langkettigen Vinylesters, wobei der gesamte Comonomergehalt zwischen 9 und 21 mol-%, bevorzugt zwischen 12 und 18 mol-% liegt. Weitere besonders bevorzugte Copolymere enthalten neben Ethylen und 8 bis 18 mol-% Vinylestern noch 0,5 bis 10 mol-% Olefine wie Propen, Buten, Isobutylen, Hexen, 4-Methylpenten, Octen, Diisobutylen und/oder Norbornen.

Vorzugsweise haben diese Ethylen-Co- und Terpolymere Schmelzviskositäten bei 140°C von 20 bis 10.000 mPas, insbesondere von 30 bis 5.000 mPas, speziell von 50 bis 2.000 mPas. Die Mittels $^1$H-NMR-Spektroskopie bestimmten Verzweigungsgrade liegen bevorzugt zwischen 1 und 9 $CH_3$/100 $CH_2$-Gruppen, insbesondere zwischen 2 und 6 $CH_3$/100 $CH_2$-Gruppen, die nicht aus den Comonomeren stammen.

Das Mischungsverhältnis zwischen den erfindungsgemäßen Terpolymeren A) und Ethylencopolymeren B1) kann je nach Anwendungsfall in weiten Grenzen variieren, wobei die Terpolymere A) als Kristallkeimbildner oftmals den kleineren Anteil darstellen. Bevorzugt enthalten derartige Additivmischungen 2 bis 70 Gew.-%, bevorzugt 3 bis 50 Gew.-% und speziell 5 bis 20 Gew.-% Bestandteil A sowie 30 bis 98 Gew.-%, bevorzugt 50 bis 97 Gew.-% und speziell 70 bis 95 Gew.-% an Bestandteil B1).

Kammpolymere als Komponente B2) sind allgemein dadurch gekennzeichnet, dass sie ein Polymerrückgrat enthalten, an das in regelmäßigen Abständen langkettige Verzweigungen bzw. Seitenketten wie beispielsweise Kohlenwasserstoffketten mit etwa 8 bis 50 C-Atomen gebunden sind. Diese Seitenketten können direkt über eine C-C-Bindung oder auch über eine Ether-, Ester, Amid- oder Imidbindung an das Polymerrückgrat gebunden sein.

Geeignete Kammpolymere als Komponente B2) können beispielsweise durch die Formel

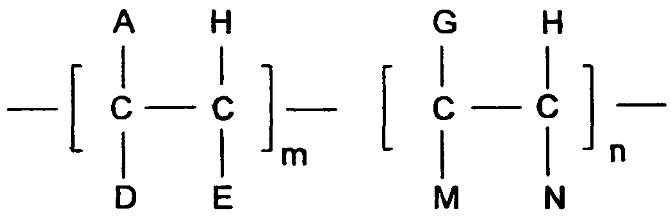

beschrieben werden. Darin bedeuten

A R', COOR', OCOR', R"-COOR', OR';
D H, $CH_3$, A oder R";
E H, A;
G H, R", R"-COOR', einen Arylrest oder einen heterocyclischen Rest;
M H, COOR", OCOR", OR", COOH;
N H, R", COOR", OCOR", einen Arylrest;
R' eine Kohlenwasserstoffkette mit 8 bis 50 Kohlenstoffatomen;
R" eine Kohlenwasserstoffkette mit 1 bis 10 Kohlenstoffatomen;
m eine Zahl zwischen 0,4 und 1,0; und
n eine Zahl zwischen 0 und 0,6.

R' steht bevorzugt für einen Kohlenwasserstoffrest mit 10 bis 24 C-Atomen und insbesondere für einen Kohlenwasserstoffrest mit 12 bis 18 C-Atomen. Bevorzugt ist R' linear oder überwiegend linear, das heißt R' enthält höchstens eine Methyl- oder Ethylverzweigung.

Geeignete Kammpolymere sind beispielsweise veresterte Copolymere ethylenisch ungesättigter Dicarbonsäuren wie Malein- oder Fumarsäure bzw. deren reaktiver Derivate mit anderen ethylenisch ungesättigten Monomeren wie Olefinen oder Vinylestern. Besonders geeignete Olefine sind dabei $\alpha$-Olefine mit 10 bis 24 C-Atomen wie beispielsweise 1-Decen, 1-Dodecen, 1-Tetradecen, 1-Hexadecen, 1-Octadecen und deren Mischungen. Auch längerkettige Olefine auf Basis oligomerisierter $C_2$-$C_6$-Olefine wie beispielsweise Poly(isobutylen) mit hohem Anteil endständiger Doppelbindungen sind als Comonomere geeignet. Besonders bevorzugt sind Copolymere aus Maleinsäure bzw. Maleinsäureanhydrid und/oder Fumarsäure mit Hexadecen, Octadecen sowie mit Mischungen dieser Olefine. In einer weiteren bevorzugten Ausführungsform enthalten die Copolymere bis zu 15 mol-% wie beispielsweise 1 bis 10 mol-% Poly(isobutylen) mit einem Molekulargewicht Mw zwischen 300 und 5.000 g/mol. Als Comonomere besonders geeignete Vinylester leiten sich von Fettsäuren mit 1 bis 12 C-Atomen und insbesondere 2 bis 8 C-Atomen wie beispielsweise Vinylacetat, Vinylpropionat, Vinylbutyrat, 2-Ethylhexansäurevinylester, Neononansäurevinylester, Neodecansäurevinylester und Neoundecansäurevinylester ab. Auch Mischungen verschiedener Vinylester sind geeignet. Besonders bevorzugt sind Copolymere von Fumarsäure mit Vinylacetat.

Üblicherweise werden diese Copolymere zu mindestens 50 % mit Alkoholen mit 10 bis 24 C-Atomen wie beispielsweise mit 12 bis 18 C-Atomen verestert. Geeignete Alkohole umfassen n-Decan-1-ol, n-Dodecan-1-ol, n-Tetradecan-1-ol, n-Hexadecan-1-ol, n-Octadecan-1-ol, n-Eicosan-1-ol und deren Mischungen. Besonders bevorzugt sind n-Tetradecan-1-ol, n-Hexadecan-1-ol und deren Mischungen. Als Kammpolymere B2) ebenfalls geeignet sind Polymere und Copolymere von $\alpha$-Olefinen, sowie veresterte Copolymere aus Styrol und Maleinsäureanhydrid, und veresterte Copolymere aus Stryol und Fumarsäure. Auch hier sind die oben genannten Alkohole mit 10bis 24 C-Atomen zur Veresterung bevorzugt. Des weiteren sind Poly(alkylacrylate), Poly(alkylmethacrylate) und Poly(alkylvinylether), die sich von Alkoholen mit 12 bis 20 C-Atomen ableiten sowie Poly(vinylester), die sich von Fettsäuren mit 12 bis 20 C-Atomen ableiten, als Kammpolymere geeignet. Ebenso geeignet sind Copolymere auf Basis der vorgenannten Alkylacrylate, Methacrylate, Alkylvinylether und/oder Vinylester wie beispielsweise Copolymere aus Alkylacrylaten und Vinylestern. Auch Mischungen von zwei oder mehr Kammpolymeren sind erfindungsgemäß geeignet.

Die Kammpolymere der Komponenten B2) haben bevorzugt Molekulargewichte Mw zwischen ca. 2.000 und ca. 50.000 g/mol, bevorzugt zwischen 3.000 und 20.000 g/mol.

Das Mischungsverhältnis zwischen erfindungsgemäßen Terpolymeren A) und Kammpolymer B2) liegt üblicherweise im Bereich von 10:1 bis 1:3 vorzugsweise zwischen 6:1 und 1:2 wie beispielsweise zwischen 5:1 und 1:1. Das Mischungsverhältnis zwischen Komponente B1) und Kammpolymer B2) liegt üblicherweise zwischen von 10:1 bis 1:3 vorzugsweise zwischen 6:1 und 1:2 wie beispielsweise zwischen 5:1 und 1:1

Die erfindungsgemäßen Additive und Additivmischungen werden zwecks besserer Handhabbarkeit üblicherweise als Konzentrate in organischen Lösemitteln eingesetzt. Geeignete Lösemittel bzw. Dispergiermittel sind beispielsweise höhersiedende aliphatische Kohlenwasserstoffe, aromatische Kohlenwasserstoffe, Alkohole, Ester, Ether und

deren Gemische. Bevorzugt enthalten Lösungen bzw. Dispersionen der erfindungsgemäßen Additive bzw. Additivmischungen 10 bis 90 Gew.-%, insbesondere 20 bis 80 Gew.-% und speziell 40 bis 75 Gew.-% Lösemittel.

Überraschenderweise wurde gefunden, dass die Lösungen der erfindungsgemäßen Additive und Additivmischungen einen niedrigeren Eigenstockpunkt aufweisen als entsprechende Lösungen auf Basis von Copolymeren aus Ethylen und ungesättigten Estern gemäß Stand der Technik. Zudem zeigen sie eine verbesserte Wirksamkeit in Bezug auf die Kaltfließverbesserung von Brennstoffölen und insbesondere eine verbesserte Löslichkeit in Brennstoffölen auch bei niedrigen Temperaturen. Somit können diese Additive und Additivmischungen bei niedrigen Temperaturen auch ohne vorheriges Erwärmen von Öl und/oder Additiv eingesetzt werden, ohne dass es im additivierten Öl zu Filtrationsproblemen durch ungelöste oder rekristallisierte Anteile des erfindungsgemäßen Terpolymers A) kommt. Andererseits können die erfindungsgemäßen Additive bei gleicher Temperatur mit geringerem Lösemittelanteil transportiert und verarbeitet werden als entsprechende Additive des Standes der Technik, wodurch Transport- und Lagerkosten reduziert werden.

Die erfindungsgemäßen Additive und Additivmischungen können Mitteldestillaten zur Verbesserung der Kaltfließfähigkeit auch in Kombination mit weiteren Additiven wie beispielsweise öllöslichen polaren Stickstoffverbindungen, Alkylphenolharzen, Polyoxyalkylenverbindungen und/oder Olefincopolymeren zugesetzt werden.

Geeignete öllösliche polare Stickstoffverbindungen sind vorzugsweise Umsetzungsprodukte von Fettaminen mit Verbindungen, die eine Acylgruppe enthalten. Bei den bevorzugten Aminen handelt es sich um Verbindungen der Formel $NR^7R^8R^9$, worin $R^7$, $R^8$ und $R^9$ gleich oder verschieden sein können, und wenigstens eine dieser Gruppen für $C_8$-$C_{36}$-Alkyl, $C_6$-$C_{36}$-Cycloalkyl, $C_8$-$C_{36}$-Alkenyl, insbesondere $C_{12}$-$C_{24}$-Alkyl, $C_{12}$-$C_{24}$-Alkenyl oder Cyclohexyl steht, und die übrigen Gruppen entweder Wasserstoff, $C_1$-$C_{36}$-Alkyl, $C_2$-$C_{36}$-Alkenyl, Cyclohexyl, oder eine Gruppe der Formeln $-(A-O)_x-E$ oder $-(CH_2)_n-NYZ$ bedeuten, worin A für eine Ethyl- oder Propylgruppe steht, x eine Zahl von 1 bis 50, E = H, $C_1$-$C_{30}$-Alkyl, $C_5$-$C_{12}$-Cycloalkyl oder $C_6$-$C_{30}$-Aryl, und n = 2, 3 oder 4 bedeuten, und Y und Z unabhängig voneinander H, $C_1$-$C_{30}$-Alkyl oder $-(A-O)_x$ bedeuten. Die Alkyl- und Alkenylreste können linear oder verzweigt sein und bis zu zwei Doppelbindungen enthalten. Bevorzugt sind sie linear und weitgehend gesättigt, das heißt sie haben Jodzahlen von weniger als 75 $gI_2/g$, bevorzugt weniger als 60 $gI_2/g$ und insbesondere zwischen 1 und 10 $gI_2/g$. Besonders bevorzugt sind sekundäre Fettamine, in denen zwei der Gruppen $R^7$, $R^8$ und $R^9$ für $C_8$-$C_{36}$-Alkyl, $C_6$-$C_{36}$-Cycloalkyl, $C_8$-$C_{36}$-Alkenyl, insbesondere für $C_{12}$-$C_{24}$-Alkyl, $C_{12}$-$C_{24}$-Alkenyl oder Cyclohexyl stehen. Geeignete Fettamine sind beispielsweise Octylamin, Decylamin, Dodecylamin, Tetradecylamin, Hexadecylamin, Octadecylamin, Eicosylamin, Behenylamin, Didecylamin, Didodecylamin, Ditetradecylamin, Dihexadecylamin, Dioctadecylamin, Dieicosylamin, Dibehenylamin sowie deren Mischungen. Speziell enthalten die Amine Kettenschnitte auf Basis natürlicher Rohstoffe wie z.B. Cocosfettamin, Talgfettamin, hydriertes Talgfettamin, Dicocosfettamin, Ditalgfettamin und Di(hydriertes Talgfettamin). Besonders bevorzugte Aminderivate sind Aminsalze, Imide und/oder Amide wie beispielsweise Amid-Ammoniumsalze sekundärer Fettamine, insbesondere von Dicocosfettamin, Ditalgfettamin und Distearylamin.

Unter Acylgruppe wird hier eine funktionelle Gruppe folgender Formel verstanden:

$$> C = O$$

Für die Umsetzung mit Aminen geeignete Carbonylverbindungen sind sowohl monomere wie auch polymere Verbindungen mit einer oder mehreren Carboxylgruppen. Bei den monomeren Carbonylverbindungen werden solche mit 2, 3 oder 4 Carbonylgruppen bevorzugt. Sie können auch Heteroatome wie Sauerstoff, Schwefel und Stickstoff enthalten. Geeignete Carbonsäuren sind beispielsweise Malein-, Fumar-, Croton-, Itacon-, Bernsteinsäure, $C_1$-$C_{40}$-Alkenylbernsteinsäure, Adipin-, Glutar-, Sebacin-, und Malonsäure sowie Benzoe-, Phthal-, Trimellit- und Pyromellitsäure, Nitrilotriessigsäure, Ethylendiamintetra-essigsäure und deren reaktive Derivate wie beispielsweise Ester, Anhydride und Säurehalogenide. Als polymere Carbonylverbindungen haben sich insbesondere Copolymere ethylenisch ungesättigter Säuren wie beispielsweise Acrylsäure, Methacrylsäure, Maleinsäure, Fumarsäure und Itaconsäure erwiesen, besonders bevorzugt sind Copolymere des Maleinsäureanhydrids. Als Comonomere sind solche geeignet, die dem Copolymer Öllöslichkeit verleihen. Unter öllöslich wird hier verstanden, dass sich das Copolymer nach Umsetzung mit dem Fettamin in praxisrelevanten Dosierraten rückstandsfrei im zu additivierenden Mitteldestillat löst. Geeignete Comonomere sind beispielsweise Olefine, Alkylester der Acrylsäure und Methacrylsäure, Alkylvinylester und Alkylvinylether mit 2 bis 75, bevorzugt 4 bis 40 und insbesondere 8 bis 20 Kohlenstoffatomen im Alkylrest. Bei Olefinen bezieht sich die Kohlenstoffzahl auf den an die Doppelbindung gebundenen Alkylrest. Die Molekulargewichte der polymeren Carbonylverbindungen liegen bevorzugt zwischen 400 und 20.000, besonders bevorzugt zwischen 500 und 10.000 wie beispielsweise zwischen 1.000 und 5.000 g/mol.

Besonders bewährt haben sich öllösliche polare Stickstoffverbindungen, die durch Reaktion aliphatischer oder aromatischer Amine, vorzugsweise langkettiger aliphatischer Amine, mit aliphatischen oder aromatischen Mono-, Di-, Tri- oder Tetracarbonsäuren oder deren Anhydriden erhalten werden (vgl. US 4 211 534). Des gleichen sind Amide und Ammoniumsalze von Aminoalkylenpolycarbonsäuren wie Nitrilotriessigsäure oder Ethylendiamintetraessigsäure mit sekundären Aminen als öllösliche polare Stickstoffverbindungen geeignet (vgl. EP 0 398 101). Andere öllösliche polare

Stickstoffverbindungen sind Copolymere des Maleinsäureanhydrids mit α,β-ungesättigten Verbindungen, die gegebenenfalls mit primären Monoalkylaminen und/oder aliphatischen Alkoholen umgesetzt werden können (vgl. EP-A-0 154 177, EP 0 777 712), die Umsetzungsprodukte von Alkenylspirobislactonen mit Aminen (vgl. EP-A-0 413 279 B1) und nach EP-A-0 606 055 A2 Umsetzungsprodukte von Terpolymeren auf Basis α,β-ungesättigter Dicarbonsäureanhydride, α,β-ungesättigter Verbindungen und Polyoxyalkylenethern niederer ungesättigter Alkohole.

Das Mischungsverhältnis zwischen den erfindungsgemäßen Additiven bzw. Additivmischungen und öllöslichen polaren Stickstoffverbindungen kann je nach Anwendungsfall variieren. Bevorzugt enthalten derartige Mischungen bezogen auf die Wirkstoffe 0,1 bis 10 Gewichtsteile, bevorzugt 0,2 bis 5 Gewichtsteile mindestens einer öllöslichen polaren Stickstoffverbindung pro Gewichtsanteil der erfindungsgemäßen Additivs.

Geeignete Alkylphenol-Aldehydharze sind insbesondere solche Alkylphenol-Aldehydharze, die sich von Alkylphenolen mit ein oder zwei Alkylresten in ortho- und/oder para-Position zur OH-Gruppe ableiten. Besonders bevorzugt als Ausgangsmaterialien sind Alkylphenole, die am Aromaten mindestens zwei zur Kondensation mit Aldehyden befähigte Wasserstoffatome tragen und insbesondere monoalkylierte Phenole. Besonders bevorzugt befindet sich der Alkylrest in der paraStellung zur phenolischen OH-Gruppe. Die Alkylreste (darunter werden für die Alkylphenolharze generell Kohlenwasserstoffreste gemäß nachstehender Definition verstanden) können bei den mit den erfindungsgemäßen Additivmischungen einsetzbaren Alkylphenol-Aldehyd-Harzen gleich oder verschieden sein. Die Alkylreste können gesättigt oder ungesättigt sein. Sie können linear oder verzweigt sein, bevorzugt sind sie linear. Sie besitzen 1 bis 200, vorzugsweise 1 bis 24, insbesondere 4 bis 16 wie beispielsweise 6 bis 12 Kohlenstoffatome. Bevorzugt handelt es sich um n-, iso- und tert-Butyl-, n- und iso-Pentyl-, n- und iso-Hexyl-, n-und iso-Octyl-, n- und iso-Nonyl-, n- und iso-Decyl-, n- und iso-Dodecyl-, Tetradecyl-, Hexadecyl-, Octadecyl-, Eicosyl-, Tripropenyl-, Tetrapropenyl-, Poly(propenyl)- und Poly(isobutenyl)reste. In einer bevorzugten Ausführungsform werden zur Herstellung der Alkylphenolharze Mischungen von Alkylphenolen mit unterschiedlichen Alkylresten eingesetzt. So haben sich beispielsweise Harze auf Basis von Butylphenol einerseits und Octyl-, Nonyl- und/oder Dodecylphenol im molaren Verhältnis von 1:10 bis 10:1 andererseits besonders bewährt.

Geeignete Alkylphenolharze können auch Struktureinheiten weiterer Phenolanaloga wie Salicylsäure, Hydroxybenzoesäure sowie deren Derivate wie Ester, Amide und Salze enthalten oder aus ihnen bestehen.

Geeignete Aldehyde für die Alkylphenol-Aldehydharze sind solche mit 1 bis 12 Kohlenstoffatomen und vorzugsweise solche mit 1 bis 4 Kohlenstoffatomen wie beispielsweise Formaldehyd, Acetaldehyd, Propionaldehyd, Butyraldehyd, 2-Ethylhexanal, Benzaldehyd, Glyoxalsäure sowie deren reaktive Equivalente wie Paraformaldehyd und Trioxan. Besonders bevorzugt ist Formaldehyd in Form von Paraformaldehyd, und insbesondere Formalin.

Das mittels Gelpermeationschromatographie gegen Poly(styrol)-Standards in THF gemessene Molekulargewicht der Alkylphenol-Aldehyd-Harze beträgt bevorzugt 500 - 25.000 g/mol, besonders bevorzugt 800 - 10.000 g/mol und speziell 1.000 - 5.000 g/mol wie beispielsweise 1500 - 3.000 g/mol. Voraussetzung ist hierbei, dass die Alkylphenol-Aldehydharze zumindest in anwendungsrelevanten Konzentrationen von 0,001 bis 1 Gew.-% öllöslich sind.

In einer bevorzugten Ausführungsform der Erfindung handelt es sich dabei um Alkylphenol-Formaldehydharze, die Oligo- oder Polymere mit einer repetitiven Struktureinheit der Formel

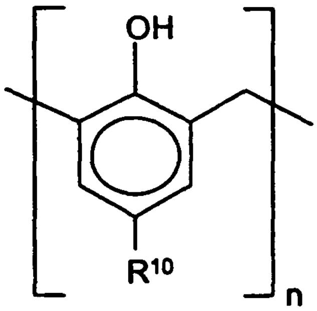

sind, worin $R^{10}$ für $C_1$-$C_{200}$-Alkyl oder -Alkenyl, O-$R^{11}$ oder O-C(O)-$R^{11}$, $R^{11}$ für $C_1$-$C_{200}$-Alkyl oder -Alkenyl und n für eine Zahl von 2 bis 100 stehen. $R^{11}$ steht bevorzugt für $C_1$-$C_{20}$-Alkyl oder -Alkenyl und insbesondere für $C_4$-$C_{16}$-Alkyl oder -Alkenyl wie beispielsweise für $C_6$-$C_{12}$-Alkyl oder -Alkenyl. Besonders bevorzugt steht $R^{10}$ für $C_1$-$C_{20}$-Alkyl oder -Alkenyl und insbesondere für $C_4$-$C_{16}$-Alkyl oder -Alkenyl wie beispielsweise für $C_6$-$C_{12}$-Alkyl oder -Alkenyl. Bevorzugt steht n für eine Zahl von 2 bis 50 und speziell für eine Zahl von 3 bis 25 wie beispielsweise eine Zahl von 5 bis 15.

Für den Einsatz in Mitteldestillaten wie Diesel und Heizöl besonders bevorzugt sind Alkylphenol-Aldehydharze mit $C_2$-$C_{40}$-Alkylresten des Alkylphenols, bevorzugt mit $C_4$-$C_{20}$-Alkylresten wie beispielsweise $C_6$-$C_{12}$-Alkylresten. Die Alkylreste können linear oder verzweigt sein, bevorzugt sind sie linear. Besonders geeignete Alkylphenol-Aldehydharze leiten sich von linearen Alkylresten mit 8 und 9 C-Atomen ab.

Für den Einsatz in schweren Heizölen und insbesondere in Destillationsrückstände enthaltenden Brennstoffölen besonders bevorzugt sind Alkylphenol-Aldehydharze, deren Alkylreste 4 bis 50 C-Atome, bevorzugt 10 bis 30 C-Atome tragen. Der Polymerisationsgrad (n) liegt hier bevorzugt zwischen 2 und 20, bevorzugt zwischen 3 und 10 Alkylphenoleinheiten.

Diese Alkylphenol-Aldehydharze sind z.B. durch Kondensation der entsprechenden Alkylphenole mit Formaldehyd, d.h. mit 0,5 bis 1,5 Mol, bevorzugt 0,8 bis 1,2 Mol Formaldehyd pro Mol Alkylphenol. Die Kondensation kann lösemittelfrei erfolgen, bevorzugt erfolgt sie jedoch in Gegenwart eines nicht oder nur teilweise wassermischbaren inerten organischen Lösemittels wie Mineralöle, Alkohole, Ether, und ähnliches. Besonders bevorzugt sind Lösemittel, die mit Wasser Azeotrope bilden können. Als derartige Lösemittel werden insbesondere Aromaten wie Toluol, Xylol Diethylbenzol und höher siedende kommerzielle Lösemittelgemische wie ®Shellsol AB, und Solvent Naphtha eingesetzt. Auch Fettsäuren und deren Derivate wie beispielsweise Ester mit niederen Alkoholen mit 1 bis 5 C-Atomen wie beispielsweise Ethanol und insbesondere Methanol sind als Lösemittel geeignet. Die Kondensation erfolgt bevorzugt zwischen 70 und 200°C wie beispielsweise zwischen 90 und 160°C. Sie wird üblicherweise durch 0,05 bis 5 Gew.-% Basen oder vorzugsweise durch 0,05 bis 5 Gew.-% Säuren katalysiert. Als saure Katalysatoren sind neben Carbonsäuren wie Essigsäure und Oxalsäure insbesondere starke Mineralsäuren wie Salzsäure, Phosphorsäure und Schwefelsäure sowie Sulfonsäuren gebräuchliche Katalysatoren. Besonders geeignete Katalysatoren sind Sulfonsäuren, die mindestens eine Sulfonsäuregruppe und mindestens einen gesättigten oder ungesättigten, linearen, verzweigten und/oder cyclischen Kohlenwasserstoffrest mit 1 bis 40 C-Atomen und bevorzugt mit 3 bis 24 C-Atomen enthalten. Besonders bevorzugt sind aromatische Sulfonsäuren, speziell alkylaromatische Mono-Sulfonsäuren mit einem oder mehreren $C_1$-$C_{28}$-Alkylresten und insbesondere solche mit $C_3$-$C_{22}$-Alkylresten. Geeignete Beispiele sind Methansulfonsäure, Butansulfonsäure, Benzolsulfonsäure, p-Toluolsulfonsäure, Xylolsulfonsäure, 2-Mesitylensulfonsäure, 4-Ethylbenzolsulfonsäure, Isopropylbenzolsulfonsäure, 4-Butylbenzolsulfonsäure, 4-Octylbenzolsulfonsäure; Dodecylbenzolsulfonsäure, Didodecylbenzolsulfonsäure, Naphthalinsulfonsäure. Auch Mischungen dieser Sulfonsäuren sind geeignet. Üblicherweise verbleiben diese nach Beendigung der Reaktion als solche oder in neutralisierter Form im Produkt. Bevorzugt werden zur Neutralisation Amine und/oder aromatische Basen eingesetzt, da sie im Produkt verbleiben können; Metallionen enthaltende und damit Asche bildende Salze werden üblicherweise abgetrennt.

Als weiterer Bestandteil geeignete Polyoxyalkylenverbindungen sind beispielsweise Ester, Ether und Ether/Ester von Polyolen, die mindestens einen Alkylrest mit 12 bis 30 C-Atomen tragen. Wenn die Alkylgruppen von einer Säure stammen, stammt der Rest von einem mehrwertigen Alkohol; kommen die Alkylreste von einem Fettalkohol, so stammt der Rest der Verbindung von einer Polysäure.

Geeignete Polyole sind Polyethylenglykole, Polypropylenglykole, Polybutylenglykole und deren Mischpolymerisate mit einem Molekulargewicht von ca. 100 bis ca. 5000, vorzugsweise 200 bis 2000 g/mol. Weiterhin geeignet sind Alkoxylate von Polyolen, wie beispielsweise von Glycerin, Trimethylolpropan, Pentaerythrit, Neopentylglykol, sowie die daraus durch Kondensation zugänglichen Oligomere mit 2 bis 10 Monomereinheiten, wie z.B. Polyglycerin. Bevorzugte Alkoxylate sind solche mit 1 bis 100, insbesondere 5 bis 50 mol Ethylenoxid, Propylenoxid und/oder Butylenoxid pro mol Polyol. Ester sind besonders bevorzugt.

Fettsäuren mit 12 bis 26 C-Atomen sind zur Umsetzung mit den Polyolen zur Bildung der Esteradditive bevorzugt, wobei besonders bevorzugt $C_{18}$- bis $C_{24}$-Fettsäuren verwendet werden, speziell Stearin- und Behensäure. Die Ester können auch durch Veresterung von polyoxyalkylierten Alkoholen hergestellt werden. Bevorzugt sind vollständig veresterte polyoxyalkylierte Poylole mit Molekulargewichten von 150 bis 2000, bevorzugt 200 bis 600. Besonders geeignet sind PEG-600-Dibehenat und Glycerin-Ethylenglykol-Tribehenat.

Als weiterer Bestandteil des erfindungsgemäßen Additivs bzw. der Additivmischung geeignete Olefincopolymere können sich direkt von monoethylenisch ungesättigten Monomeren ableiten oder indirekt durch Hydrierung von Polymeren, die sich von mehrfach ungesättigten Monomeren wie Isopren oder Butadien ableiten, hergestellt werden. Bevorzugte Copolymere enthalten neben Ethylen Struktureinheiten, die sich von $\alpha$-Olefinen mit 3 bis 24 C-Atomen ableiten und Molekulargewichte von bis zu 120.000 g/mol aufweisen.

Bevorzugte $\alpha$-Olefine sind Propylen, Buten, Isobuten, n-Hexen, Isohexen, n-Octen, Isoocten, n-Decen, Isodecen. Der Comonomergehalt an $\alpha$-Olefinen mit 3 bis 24 C-Atomen liegt bevorzugt zwischen 15 und 50 mol-%, besonders bevorzugt zwischen 20 und 35 mol-% und speziell zwischen 30 und 45 mol-%. Diese Copolymeren können auch geringe Mengen, z.B. bis zu 10 mol-% weiterer Comonomere, wie z.B. nicht endständige Olefine oder nicht konjugierte Olefine, enthalten. Bevorzugt sind Ethylen-Propylen-Copolymere. Die Olefincopolymere können nach bekannten Methoden hergestellt werden, z.B. mittels Ziegler- oder Metallocen-Katalysatoren.

Weitere geeignete Olefincopolymere sind Blockcopolymere, die Blöcke aus olefinisch ungesättigten, aromatischen Monomeren A und Blöcke aus hydrierten Polyolefinen B enthalten. Besonders geeignet sind Blockcopolymere der Struktur $(AB)_nA$ und $(AB)_m$, wobei n eine Zahl zwischen 1 und 10 und m eine Zahl zwischen 2 und 10 ist.

Das Mischungsverhältnis zwischen den erfindungsgemäßen Additiven bzw. Additivmischungen und Alkylphenolharzen, Polyoxyalkylenverbindungen bzw. Olefincopolymeren kann je nach Anwendungsfall variieren. Bevorzugt enthalten derartige Mischungen bezogen auf die Wirkstoffe jeweils 0,1 bis 10 Gewichtsteile, bevorzugt 0,2 bis 5 Gewichtsteile mindestens eines Alkylphenolharzes, einer Polyoxyalkylenverbindung und/oder eines Olefincopolymers pro Gewichtsanteil des erfindungsgemäßen Additivs bzw. der erfindungsgemäßen Additivmischung.

Die erfindungsgemäßen Additive und Additivmischungen können allein oder auch zusammen mit anderen Additiven verwendet werden, z.B. mit anderen Stockpunkterniedrigern oder Entwachsungshilfsmitteln, mit Antioxidantien, Cetanzahlverbesserern, Dehazern, Demulgatoren, Detergenzien, Dispergatoren, Entschäumern, Farbstoffen, Korrosionsinhibitoren, Lubricity-Additiven, Schlamminhibitoren, Odorantien und/oder Zusätzen zur Erniedrigung des Cloud-Points.

Die erfindungsgemäßen Additive und Additivmischungen sind geeignet, die Kattfließeigenschaften von tierischen, pflanzlichen, mineralischen und/oder synthetischen Brennstoffölen zu verbessern. Gleichzeitig haben diese Additive und die aus ihnen hergestellten Additivmischungen und ihre konzentrierten Formulierungen in Mineralöl basierten Lösemitteln niedrige Eigenstockpunkte. Dies erlaubt einen problemlosen Einsatz dieser Additive und Additivmischungen bei niedrigeren Temperaturen bzw. in höheren Konzentrationen als es mit Additiven des Standes der Technik möglich ist. Auch können die Additivmischungen auf Grund ihrer guten Löslichkeit in kalte Öle dosiert werden, ohne dass es zu Filterverstopfungen durch ungelöste oder rekristallisierte Anteile der erfindungsgemäßen Additive kommt.

Besonders geeignet sind sie für die Verbesserung der Eigenschaften von Mineralölen und Mineralöldestillaten im Mitteldestillatbereich wie beispielsweise Jet-Fuel, Kerosin, Diesel und Heizöl. Die erfindungsgemäßen Additive sind insbesondere zur Absenkung des CFPP-Wertes von Mitteldestillaten mit sehr niedrigen Cloud Points von unter -20°C und speziell unterhalb -22° wie beispielsweise unterhalb -25°C und sehr geringen Gehalten von weniger als 2 Flächen-% an n-Paraffinen mit 20 und mehr C-Atomen geeignet. Erfindungsgemäße Additivmischungen, die die Komponenten A und B1 enthalten, sind insbesondere für Mitteldestillate mit Cloud Points unterhalb +5°C wie beispielsweise zwischen -15°C und +3°C geeignet. Insbesondere geeignet sind sie für solche Öle, die einen hohen Gehalt an besonders kältekritischen Paraffinen mit einer C-Kettenlänge von 20 und mehr C-Atomen von mehr als 4,0 Fl.-% und insbesondere mehr als 4,5 Fl.-% aufweisen. Additivmischungen, die die Komponenten A und B2 enthalten, sind insbesondere für Mitteldestillate mit Cloud Points oberhalb -3 °C und speziell mit Cloud Points oberhalb 0°C wie beispielsweise mit Cloud Points oberhalb +5°C geeignet. Insbesondere geeignet sind letztere Mischungen für solche Öle, die einen hohen Gehalt an besonders kältekritischen Paraffinen mit einer C-Kettenlänge von 20 und mehr C-Atomen von mehr als 4,5 Fl.-% und insbesondere mehr als 5,0 Fl.-% aufweisen. Bestimmt wird der Paraffingehalt durch gaschromatographische Trennung des Öls unter Detektion durch einen FID-Detektor und Berechnung des Integrals der n-Paraffine mit einer Kettenlänge von mindestens 20 C-Atomen im Verhältnis zum Gesamtintegral des Öls. Zwecks Absenkung des Schwefelgehalts sind sie häufig einer hydrierenden Raffination unterzogen worden und enthalten bevorzugt weniger als 350 ppm Schwefel und insbesondere weniger als 100 ppm Schwefel wie beispielsweise weniger als 50 ppm oder 10 ppm Schwefel.

Bevorzugt enthalten die erfindungsgemäßen Brennstofföle 5 bis 5.000 ppm, besonders bevorzugt 10 bis 2.000 ppm und speziell 50 bis 1.000 ppm der erfindungsgemäßen Additivmischungen.

Als Mitteldestillat bezeichnet man insbesondere solche Mineralöle, die durch Destillation von Rohöl gewonnen werden und im Bereich von 120 bis 450°C sieden, beispielsweise Kerosin, Jet-Fuel, Diesel und Heizöl. Besonders vorteilhaft sind die erfindungsgemäßen Additivmischungen in solchen Mitteldestillaten, die 90 %-Destillationspunkte gemäß ASTM D86 oberhalb 340 °C, insbesondere oberhalb 360°C und in Spezialfällen oberhalb 370°C aufweisen. Mitteldestillate umfassen weiterhin synthetische Brennstofföle im Siedebereich von etwa 120 bis 450°C sowie Mischungen aus mineralischen und synthetischen Mitteldestillaten. Beispiele für synthetische Mitteldestillate sind insbesondere nach dem Fischer-Tropsch-Verfahren aus Kohle, Erdgas oder auch Biomasse hergestellte Brennstoffe. Dabei wird zuerst Synthesegas hergestellt und dieses über den Fischer-Tropsch-Prozess in Normalparaffine überführt. Die so hergestellten Normalparaffine können anschließend beispielsweise durch katalytisches Cracken, Isomerisierung, Hydrocracken oder Hydrosiomerisierung modifiziert werden.

Besonderes gut wirksam sind die erfindungsgemäßen Additivmischungen auch in Mitteldestillaten, die untergeordnete Mengen wie beispielsweise bis zu 30 Vol.-% an Ölen tierischen und/oder pflanzlichen Ursprungs enthalten. Beispiele für geeignete Öle tierischen und/oder pflanzlichen Ursprungs sind sowohl Triglyceride sowie daraus abgeleitete Ester mit niederen Alkoholen mit 1 bis 5 C-Atomen wie Ethyl- und insbesondere Methylester, die beispielsweise aus Baumwolle, Palmkernen, Raps, Soja, Sonnenblumen, Talg und ähnlichem zugänglich sind.

Beispiele

Folgende Additive wurden eingesetzt:

Herstellung der eingesetzten Ethylen-Copolymere

In einem kontinuierlich betriebenen Hochdruckautoklaven wurden Ethylen, Vinylester und Propylen unter Zugabe einer 10 gew.-%igen Lösung von Bis(2-ethylhexyl)-peroxidicarbonat als Initiator und Methylethylketon als Molekulargewichtsregler copolymerisiert. Das entstandene Polymer wurde vom Reaktionsgemisch abgetrennt und anschließend von Restmonomeren befreit.

Zum Vergleich wurden nach gleichem Verfahren hergestellte Copolymere aus Ethylen und Neodecansäurevinylester bzw. 2-Ethylhexylvinylester herangezogen.

Der Gehalt an Vinylester wird mittels Pyrolyse des bei 150°C/100 mbar von Restmonomeren befreiten Polymerisats bestimmt. Hierzu werden 100 mg des Polymerisats mit 200 mg reinem Polyethylen in einem Pyrolysekolben 5 Minuten bei 450°C in einem geschlossenen System unter Vakuum thermisch gespalten. Pyrolysat und Rückstand werden in Toluol gelöst und nach Zugabe von 2-Propanol mit einer Lösung von KOH in Ethanol (0,1 mol KOH je Liter Lösung) potentiometrisch bis zum Äquivalenzpunkt titriert: Der KOH-Verbrauch entspricht dem Gehallt an Vinylester.

Die Bestimmung der Gesamtzahl der nicht von Vinylestern stammenden Methylgruppen des Polymers erfolgt mittels $^1$H-NMR-Spektroskopie bei einer Messfrequenz von 500 MHz an 10 bis 15 %igen Lösungen in $C_2D_2Cl_4$ bei 300 K. Das Integral der Methylprotonen zwischen etwa 0,7 bis 0,9 ppm wird zu dem der Methylen- und Methinprotonen zwischen etwa 0,9 und 1,9 ppm ins Verhältnis gesetzt. Eine Korrektur der Anzahl der Methylgruppen um die vom eingesetzten Moderator abgeleiteten und mit den Signalen der Hauptkette überlagernden Struktureinheiten erfolgt auf Basis des separat erscheinenden Methinprotons des Moderators (zum Beispiel zeigen Methylethylketon und Propanal Multipletts bei 2,4 und 2,5 ppm).

Die Bestimmung des Gehalts an Methylgruppen, die sich von Propen ableiten, erfolgt mittels $^{13}$C-NMR-Spektroskopie bei einer Messfrequenz von 125 MHz an ebenfalls 10 bis 15 %igen Lösungen in $C_2D_2Cl_4$ bei 300 K. Das Integral der vom Propen abgeleiteten Methylgruppen zwischen 19,3 und 19,9 ppm wird zu demjenigen der aliphatischen Kohlenstoffatome des Polymerrückgrats ins Verhältnis gesetzt. Zur Ermittlung des Integrals der aliphatischen Kohlenstoffatome des Polymerrückgrats wird die Summe der Integrale zwischen 6,0 und 19,3 ppm sowie 19,9 und 44 ppm gebildet und davon der aus den Alkylresten der ungesättigten Ester stammende Anteil subtrahiert. Letzterer ist über die Strukturformel des eingesetzten ungesättigten Esters aus dem Signal der aus dem ungesättigten Ester abgeleiteten Methinprotonen zugänglich. Die Signale der aus den Vinylestern abgeleiteten Methinprotonen erscheinen deutlich von den übrigen Signalen separiert zwischen 68 und 76 ppm.. Vorteilhafter Weise werden $^1$H- und $^{13}$C-NMR-Messung an derselben Probe durchgeführt.

Die Bestimmung der Anzahl der Kettenenden erfolgt durch Subtraktion der mittels $^{13}$C-NMR bestimmten Anzahl der vom Propen abgeleiteten Methylgruppen von der mittels $^1$H-NMR bestimmten Gesamtzahl an Methylgruppen. Beide Werte sind dabei als dimensionslose Zahlen zu behandeln.

Tabelle 1: Charakterisierung der eingesetzten Ethylen-Terpolymere A

| Polymer | Vinylester [mol-%] | Propen-$CH_3$ pro 100 aliph. $CH_2$ | Anzahl der Kettenenden [$CH_3$/ 100 $CH_2$] | $V_{140}$ [mPas] |
|---|---|---|---|---|
| A1 | 6,1 mol-% VeoVa | 1,0 | 5,2 | 227 |
| A2 | 5,7 mol-% VeoVa | 1,6 | 5,2 | 242 |
| A3 | 5,4 mol-% VeoVa | 2,3 | 4,3 | 276 |
| A4 | 6,5 mol-% VeoVa | 1,9 | 6,8 | 118 |
| A5 | 5,8 mol-% 2-EHVE | 1,7 | 5,0 | 289 |
| A65 (Vgl.) | 6,8 mol-% VeoVa | 0 | 5,3 | 200 |
| A7 (Vgl.) | 6,6 mol-% 2-EHVE | 0 | 4,8 | 231 |
| VeoVa = Neodecansäurevinylester; 2-EHVE = 2-Ethylhexylvinylester | | | | |

Charakterisierung der eingesetzten Additive B

B1-I) Copolymer aus Ethylen und 11,8 mol-% Vinylacetat mit einer bei 140°C gemessenen Schmelzviskosität von 210 mPas.

B1-II) Copolymer aus Ethylen und 13,3 mol-% Vinylacetat mit einer bei 140°C gemessenen Schmelzviskosität von 135 mPas.

B1-III) Terpolymer aus Ethylen, 13,7 mol-% Vinylacetat und 1,4 mol-% Neodecansäurevinylester mit einer bei 140°C gemessenen Schmelzviskosität von 98 mPas.

B2-I) Alternierendes Copolymer aus Maleinsäureanhydrid und Octadecen, vollständig verestert mit einer Mischung gleicher Teile Tetradecanol und Hexadecanol.

Alle verwendeten Polymere A und B wurden, sofern nicht anders angegeben, als 50 %ige Einstellungen in höhersiedendem, vorwiegend aliphatischem Lösemittel eingesetzt.

Tabelle 2: Charakterisierung der Testöle:

| Als Testöle wurden aktuelle Öle aus europäischen Raffinerien herangezogen. Die Bestimmung des CFPP-Werts erfolgte gemäß EN 116 und die Bestimmung des Cloud Points gemäß ISO 3015. Die Bestimmung des Paraffingehalts erfolgt durch gaschromatographische Trennung des Öls unter Detektion durch einen FID-Detektor und Berechnung des Integrals der n-Paraffine mit einer Kettenlänge von mindestens 20 C-Atomen im Verhältnis zum Gesamtintegral. | | | | | |
|---|---|---|---|---|---|
| | Testöl 1 | Testöl 2 | Testöl 3 | Testöl 4 | Testöl 5 |
| Destillation<br>IBP [°C]<br>20% [°C]<br>90% [°C]<br>FBP [°C] | <br>190<br>212<br>305<br>315 | <br>157<br>200<br>379<br>396 | <br>152<br>207<br>354<br>384 | <br>189<br>241<br>335<br>359 | <br>187<br>223<br>337<br>360 |
| Cloud Point [°C] | -26 | + 5,8 | +1,0 | -7,0 | -5,1 |
| CFPP [°C] | -27 | + 1 | -5 | -10 | -9 |
| Dichte @15°C [g/cm$^3$] | 0,817 | 0,851 | 0,837 | 0,840 | 0,834 |
| Paraffingehalt $\geq C_{20}$ [Fl.-%] | < 1 | 6,1 | 5,6 | 4,4 | 7,9 |

Wirksamkeit der Terpolymere als Kaltfließverbesserer

Die überlegene Wirksamkeit der erfindungsgemäßen Terpolymere für Mineralöle und Mineralöldestillate wird an Hand des CFPP-Tests (Cold Filter Plugging Test nach EN 116) beschrieben.

Tabelle 3: Prüfung als Kaltfließverbesserer in Testöl 1

| | | CFPP [°C] | | |
|---|---|---|---|---|
| Beispiel | Polymer | 100 ppm | 200 ppm | 300ppm |
| 1 | A1 | -33 | -38 | <-40 |
| 2 | A2 | -31 | -39 | <-40 |
| 3 | A4 | -32 | -38 | <-40 |
| 4 (Vgl.) | A6 | -29 | -35 | -39 |

Tabelle 4: Prüfung als Kaltfließverbesserer in Testöl 2

| Für die Prüfung als Kaltfließverbesserer in Testöl 2 wurden jeweils ein Teil der erfindungsgemäßen Terpolymere mit einem Teil des Polymers B2-1 und 0,5 Teilen des Polymers B1-I eingesetzt. Die angegebene Dosierrate bezieht sich auf die insgesamt eingesetzte Menge Additiv. | | | | |
|---|---|---|---|---|
| | | CFPP [°C] | | |
| Beispiel | Terpolymer A | 100 ppm | 150 ppm | 200ppm |
| 5 | A1 | -9 | -11 | -16 |
| 6 | A2 | -11 | -15 | -16 |

(fortgesetzt)

| Beispiel | Terpolymer A | CFPP [°C] | | |
|---|---|---|---|---|
| | | 100 ppm | 150 ppm | 200ppm |
| 7 | A3 | -8 | -12 | -17 |
| 8 | A4 | -11 | -12 | -15 |
| 9 | A5 | -9 | -11 | -16 |
| 10 (Vgl.) | A6 | -7 | -10 | -14 |
| 11 (Vgl.) | A7 | -6 | -10 | -13 |

Tabelle 5: Prüfung als Kaltfließverbesserer in Testöl 3

Für die Prüfung als Kaltfließverbesserer in Testöl 3 wurden jeweils zwei Teile der erfindungsgemäßen Terpolymere mit 1,5 Teilen des Polymers B2-1 und einem Teil des Polymers B1-I eingesetzt. Die angegebene Dosierrate bezieht sich auf die insgesamt eingesetzte Menge Additiv.

| Beispiel | Terpolymer A | CFPP [°C] | | |
|---|---|---|---|---|
| | | 100 ppm | 200 ppm | 300 ppm |
| 12 | A1 | -15 | -16 | -18 |
| 13 | A2 | -13 | -14 | -16 |
| 14 | A3 | -14 | -15 | -17 |
| 15 | A4 | -13 | -13 | -17 |
| 16 (Vgl.) | A6 | -10 | -12 | -14 |

Tabelle 6: Prüfung als Kaltfließverbesserer in Testöl 4

Für die Prüfung als Kattfließverbesserer in Testöl 4 wurden jeweils 1 Teil der erfindungsgemäßen Terpolymere mit 5 Teilen des Polymers B1-II eingesetzt. Die angegebene Dosierrate bezieht sich auf die insgesamt eingesetzte Menge Additiv.

| Beispiel | Terpolymer A | CFPP [°C] | | |
|---|---|---|---|---|
| | | 50 ppm | 100 ppm | 200 ppm |
| 17 | A1 | -16 | -20 | -20 |
| 18 | A2 | -15 | -17 | -24 |
| 19 | A3 | -15 | -18 | -20 |
| 20 | A4 | -13 | -18 | -20 |
| 21 | A5 | -14 | -18 | -20 |
| 22 (Vgl.) | A6 | -13 | -17 | -19 |
| 23 (Vgl.) | A7 | -11 | -15 | -16 |

Handhabbarkeit der Additivkonzentrate

Zur Beurteilung der Kaltfließfähigkeit von Konzentraten der erfindungsgemäßen Terpolymere wurden die in Tabelle 1 beschriebenen Polymere 35 Gew.-%ig in einem vorwiegend aliphatischen Lösemittelgemisch mit Siedebereich von 175-260°C und einem Flammpunkt von 66°C gelöst. Dazu wurden Polymer und Lösemittel unter Rühren auf 80°C erwärmt und nach Homogenisierung auf Raumtemperatur abgekühlt. Anschließend wurden die Eigenstockpunkte der Konzentrate gemäß DIN ISO 3016 bestimmt.

Tabelle 7: Eigenstockpunkt der Polymerkonzentrate

| Beispiel | Terpolymer | Pour Point |
|---|---|---|
| 24 | A1 | +15 |
| 25 | A2 | +6 |
| 26 | A3 | -3 |
| 27 | A4 | -18 |
| 28 | A5 | +15 |
| 29 (Vgl.) | A6 | +21 |
| 30 (Vgl.) | A7 | +27 |

Filterverstopfungstendenz der Terpolymere

Weiterhin wurde die Filterverstopfungstendenz eines mit erfindungsgemäßen Terpolymeren additivierten Testöls gemäß IP 387/97 bestimmt. Bei diesem Test werden 300 ml eines additivierten Dieselkraftstoffs bei definierter Temperatur und einer Pumpenleistung von 20 ml/min über ein 1,6 µm Glasfiberfilter filtriert. Der Test gilt als bestanden, wenn ein Volumen von 300 ml das Filter passiert hat, ohne dass der Druck (p) 105 kPa erreicht oder überschritten hat (Filterverstopfungstendenz FBT = $(1+(p/105)^2)^{0,5}$ <1,41). Er gilt als nicht bestanden, wenn der Druck 105 kPa erreicht, bevor das gesamte Volumen (V) von 300 ml den Filter passiert hat (Filterverstopfungstendenz FBT = $(1+(300/V)^2)^{0,5}$ ≥1,41). Für die Beurteilung der Terpolymere ist wichtig, dass die Filterverstopfungstendenz des unadditivierten Kraftstoffs durch Zugabe des Terpolymers so wenig wie möglich erhöht wird.

Für die Durchführung des Tests wurden 350 ml des auf 20 bis 22°C temperierten Testöl 5 mit 500 ppm des auf 60°C temperierten Terpolymers (50 %ige Lösung) versetzt. Nach manuellem Schütteln und 30-minütiger Lagerung bei 60°C wurde das additivierte Öl 16 Stunden bei 20°C gelagert. Anschließend wurde das additivierte Öl ohne nochmaliges Schütteln zur Filtration eingesetzt.

Tabelle 8: Filterverstopfungstendenz des additivierten Testöls 5 gemäß IP 387/97

| Beispiel | Terpolymer | Filterverstopfungstendenz |
|---|---|---|
| 31 (Vgl.) | ohne | 1,01 |
| 32 | A1 | 1,10 |
| 33 | A2 | 1,05 |
| 34 | A3 | 1,04 |
| 35 | A4 | 1,04 |
| 36 (Vgl.) | A5 | 2,12 |

Verträglichkeit der Polymere mit EVA-Copolymeren

Zur Untersuchung der Verträglichkeit der erfindungsgemäßen Terpolymere mit als Arrestoren für die Paraffinkristallisation wirksamen Ethylen-Copolymeren, die einen höheren Comonomergehalt aufweisen, wurden 35 gew.-%ige Lösungen der erfindungsgemäßen Terpolymere mit Polymer B1-II im Gewichtsverhältnis von 1 : 9 in Solvent Naphtha, einem hochsiedenden kommerziellen, vorwiegend aromatischen Lösemittelgemisch hergestellt und 16 Stunden bei 50°C gelagert. Anschließend wurde das Erscheinungsbild visuell beurteilt. Ausfällungen bzw. unlösliche Anteile zeigen eine mangelnde Verträglichkeit der Polymere.

Tabelle 9: Verträglichkeit mit Arrestoren

| Beispiel | Additiv | | optische Beurteilung |
|---|---|---|---|
| 37 | A2 | B1-II | homogen; klar |
| 38 | A3 | B1-II | homogen; klar |
| 39 | A4 | B1-II | homogen; klar |

(fortgesetzt)

| Beispiel | Additiv | | optische Beurteilung |
|---|---|---|---|
| 40 | A5 | B1-II | homogen; leicht trübe |
| 41 (Vgl.) | A6 | B1-II | viele große Flocken |
| 42 (Vgl.) | A7 | B1-II | viele Flocken, Sediment |

Die Versuche zeigen, dass die erfindungsgemäßen Additive hinsichtlich der Verbesserung der Kaltfließfähigkeit und insbesondere der CFPP-Absenkung von Mitteldestillaten den Additiven des Standes der Technik überlegen sind. Gleichzeitig sind sie bei niedrigeren Temperaturen einsetzbar. Sie sind insbesondere auch in Anwendungsfällen einsetzbar, in denen besonders saubere Kraftstoffe mit sehr geringer Filterverstopfungstendenz erforderlich sind.

## Patentansprüche

1. Terpolymere aus Ethylen, mindestens einem ethylenisch ungesättigten Ester und Propen, welche

   i) 4,0 bis 12,0 mol-% von mindestens einem ethylenisch ungesättigten Ester mit einem $C_4$- bis $C_{20}$-Alkylrest abgeleitete Struktureinheiten,
   ii) 0,5 bis 4,0 an das Polymerrückgrat gebundene und vom Propen abgeleitete Methylgruppen pro 100 aliphatische C-Atome, und
   iii) weniger als 8,0 von Kettenenden stammende Methylgruppen pro 100 $CH_2$-Gruppen aufweisen.

2. Terpolymere nach Anspruch 1, worin der Anteil an ethylenisch ungesättigtem Ester zwischen 4,5 und 10,0 mol-% liegt.

3. Terpolymere nach Anspruch 1 und/oder 2, worin der ethylenisch ungesättigte Ester der Vinylester einer Carbonsäure mit 5 bis 21 C-Atomen ist.

4. Terpolymere nach Anspruch 1 und/oder 2, worin bis zu 3,0 mol-% an Struktureinheiten, die sich von ungesättigten Estern mit Alkylketten mit 1 bis 3 C-Atomen ableiten, enthalten sind.

5. Terpolymere nach einem oder mehreren der Ansprüche 1 bis 4, worin der Gehalt an Methylgruppen, die sich vom Propen ableiten, zwischen 0,6 und 4,0 pro 100 aliphatischer C-Atomen liegt.

6. Terpolymere nach einem oder mehreren der Ansprüche 1 bis 5, worin die Anzahl der von Kettenenden stammenden Methylgruppen zwischen 2,5 und 8,0 $CH_3$/100 $CH_2$-Gruppen liegt.

7. Terpolymere nach einem oder mehreren der Ansprüche 1 bis 6, worin die Summe G aus molarem Gehalt an ungesättigtem Ester i) und der Anzahl der vom Propen abgeleiteten Methylgruppen pro 100 aliphatischen C-Atomen des Polymers ii)

$$G = [\text{mol-\% ungesättigter Ester}] + [\text{Propen-}CH_3]$$

   zwischen 5,5 und 11,0 liegt.

8. Terpolymere nach einem oder mehreren der Ansprüche 1 bis 7, worin das mittels Gelpermeationschromatographie gegen Poly(styrol)-Standards bestimmte gewichtsmittlere Molekulargewicht Mw zwischen 2.500 und 50.000 g/mol liegt.

9. Additivmischungen, enthaltend

   A) mindestens ein Terpolymer gemäß einem oder mehreren der Ansprüche 1 bis 8 und
   B) 0,5 bis 20 Gewichtsteile bezogen auf A) mindestens einer weiteren, als Kälteadditiv für Mineralöle wirksamen,

Komponente ausgewählt aus

B1) Copolymeren aus Ethylen und ethylenisch ungesättigten Verbindungen, deren Gehalt an ethylenisch ungesättigten Verbindungen mindestens 2 mol% höher ist als der Gehalt des unter A) definierten Terpolymers an ethylenisch ungesättigten Estern,
B2) Kammpolymeren, und
B3) Mischungen aus B1) und B2).

**10.** Verwendung von Terpolymeren gemäß einem oder mehreren der Ansprüche 1 bis 8 zur Verbesserung der Kältefließfähigkeit von Brennstoffölen.

**11.** Verfahren zur Verbesserung der Kältefließfähigkeit von Brennstoffölen, indem man dem Brennstofföl mindestens ein Terpolymer gemäß einem oder mehreren der Ansprüche 1 bis 8 zusetzt.

**12.** Brennstofföle, enthaltend mindestens ein Terpolymer gemäß einem oder mehreren der Ansprüche 1 bis 8 und ein Mitteldestillat.

**Claims**

**1.** A terpolymer of ethylene, at least one ethylenically unsaturated ester and propene, which has

i) from 4.0 to 12.0 mol% of structural units derived from at least one ethylenically unsaturated ester having a $C_4$- to $C_{20}$-alkyl radical,
ii) from 0.5 to 4.0 methyl groups bonded to the polymer backbone and derived from propene per 100 aliphatic carbon atoms, and
iii) fewer than 8.0 methyl groups stemming from chain ends per 100 $CH_2$ groups.

**2.** The terpolymer as claimed in claim 1, in which the proportion of ethylenically unsaturated ester is between 4.5 and 10.0 mol%.

**3.** The terpolymer as claimed in claim 1 and/or 2, in which the ethylenically unsaturated ester is the vinyl ester of a carboxylic acid having from 5 to 21 carbon atoms.

**4.** The terpolymer as claimed in claim 1 and/or 2, in which up to 3.0 mol% of structural units derived from unsaturated esters having alkyl chains having from 1 to 3 carbon atoms are present.

**5.** The terpolymer as claimed in one or more of claims 1 to 4, in which the content of methyl groups derived from propene is between 0.6 and 4.0 per 100 aliphatic carbon atoms.

**6.** The terpolymer as claimed in one or more of claims 1 to 5, in which the number of methyl groups stemming from chain ends is between 2.5 and 8.0 $CH_3$/100 $CH_2$ groups.

**7.** The terpolymer as claimed in one or more of claims 1 to 6, in which the sum G of molar content of unsaturated ester i) and the number of methyl groups derived from propene per 100 aliphatic carbon atoms of the polymer ii)

$$G = [\text{mol\% of unsaturated ester}] + [\text{propene-}CH_3]$$

is between 5.5 and 11.0.

**8.** The terpolymer as claimed in one or more of claims 1 to 7, in which the weight-average molecular weight Mw determined by means of gel permeation chromatography against poly(styrene) standards is between 2500 and 50 000 g/mol.

**9.** An additive mixture comprising

A) at least one terpolymer as claimed in one or more of claims 1 to 8, and
B) from 0.5 to 20 parts by weight, based on A), of at least one further component which is effective as a cold additive for mineral oils and is selected from

B1) copolymers of ethylene and ethylenically unsaturated compounds whose content of ethylenically unsaturated compounds is at least 2 mol% higher than the content of ethylenically unsaturated esters in the terpolymer defined under A),
B2) comb polymers, and
B3) mixtures of B1) and B2).

**10.** The use of a terpolymer as claimed in one or more of claims 1 to 8 for improving the cold flowability of fuel oils.

**11.** A process for improving the cold flowability of fuel oils by adding at least one terpolymer as claimed in one or more of claims 1 to 8 to the fuel oil.

**12.** A fuel oil comprising at least one terpolymer as claimed in one or more of claims 1 to 8 and a middle distillate.

## Revendications

**1.** Terpolymères d'éthylène, d'au moins un ester à insaturation éthylénique et de propène, qui comportent

i) 4,0 à 12,0 % en moles d'au moins un ester à insaturation éthylénique comportant des motifs structuraux dérivés d'un radical alkyle en $C_4$-$C_{20}$,
ii) 0,5 à 4,0 groupes méthyle liés au squelette polymère et dérivés du propène pour 100 atomes de carbone aliphatiques, et
iii) moins de 8,0 groupes méthyle provenant d'extrémités de chaînes pour 100 groupes $CH_2$.

**2.** Terpolymères selon la revendication 1, dans lesquels la proportion d'ester à insaturation éthylénique est comprise entre 4,5 et 10,0 % en moles.

**3.** Terpolymères selon la revendication 1 et/ou la revendication 2, dans lesquels l'ester à insaturation éthylénique est l'ester vinylique d'un acide carboxylique ayant de 5 à 21 atomes de carbone.

**4.** Terpolymères selon la revendication 1 et/ou la revendication 2, dans lesquels sont contenus jusqu'à 3,0 % en moles de motifs structuraux qui dérivent d'esters insaturés à chaînes alkyle ayant de 1 à 3 atomes de carbone.

**5.** Terpolymères selon une ou plusieurs des revendications 1 à 4, dans lesquels la teneur en groupes méthyle qui dérivent du propène est comprise entre 0,6 et 4,0 pour 100 atomes de carbone aliphatiques.

**6.** Terpolymères selon une ou plusieurs des revendications 1 à 5, dans lesquels le nombre des groupes méthyle provenant d'extrémités de chaînes est compris entre 2,5 et 8,0 groupes $CH_3$ pour 100 groupes $CH_2$.

**7.** Terpolymères selon une ou plusieurs des revendications 1 à 6, dans lesquels la somme G de la teneur molaire en ester insaturé i) et du nombre des groupes méthyle dérivés du propène pour 100 atomes de carbone aliphatiques du polymère ii)

$$G = [\text{\% en moles d'ester insaturé}] + [CH_3 \text{ de propène}]$$

est comprise entre 5,5 et 11,0.

**8.** Terpolymères selon une ou plusieurs des revendications 1 à 7, dans lesquels la masse moléculaire moyenne en poids Mw, déterminée par chromatographie par perméation de gel par rapport à des étalons polystyrène, est comprise entre 2 500 et 50 000 g/mole.

**9.** Mélanges d'additifs, contenant

A) au moins un terpolymère selon une ou plusieurs des revendications 1 à 8 et
B) 0,5 à 20 parties en poids, par rapport à A), d'au moins un autre composant efficace en tant additif pour l'amélioration des propriétés à froid pour huiles minérales, choisi parmi

B1) des copolymères d'éthylène et de composés à insaturation éthylénique, dont la teneur en composés à insaturation éthylénique est supérieure d'au moins 2 % en moles à la teneur en esters à insaturation éthylénique du terpolymère défini en A),
B2) des polymères en peigne, et
B3) des mélanges de B1) et B2).

**10.** Utilisation des terpolymères selon une ou plusieurs des revendications 1 à 8, pour l'amélioration de l'aptitude à l'écoulement à froid d'huiles combustibles.

**11.** Procédé pour l'amélioration de l'aptitude à l'écoulement à froid d'huiles combustibles, dans lequel on ajoute à l'huile combustible au moins un terpolymère selon une ou plusieurs des revendications 1 à 8.

**12.** Huiles combustibles, contenant au moins un terpolymère selon une ou plusieurs des revendications 1 à 8 et un distillat moyen.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0099646 A
- EP 0807642 A
- EP 0203554 A
- EP 0890589 A
- US 3961916 A
- EP 0217602 A
- EP 0741181 A
- WO 9400537 A
- EP 0931824 A
- EP 0271738 A
- EP 0922716 A
- US 4211534 A
- EP 0398101 A
- EP 0154177 A
- EP 0777712 A
- EP 0413279 A
- EP 0606055 A


### In der Beschreibung aufgeführte Nicht-Patentliteratur


- *Macromolecules,* 1997, vol. 30, 246-256